Europäisches Patentamt

(19) European Patent Office

Office européen des brevets

(11) Numéro de publication: **0 001 370**
**B1**

(12) **FASCICULE DE BREVET EUROPEEN**

(45) Date de publication du fascicule de brevet: **25.11.81**

(51) Int. Cl.³: **B 60 P 3/14, B 60 S 5/00**

(21) Numéro de dépôt: **78420005.7**

(22) Date de dépôt: **25.08.78**

(54) **Unité mobile avec appareils de levage et de démontage indépendants et amovibles, en vue du dépannage et de l'entretien sur place de véhicules routiers.**

(30) Priorité: **16.09.77 FR 7728669**

(43) Date de publication de la demande:
**04.04.79 Bulletin 79/7**

(45) Mention de la délivrance du brevet:
**25.11.81 Bulletin 81/47**

(84) Etats Contractants Désignés:
**BE CH DE GB LU NL SE**

(56) Documents cités:
**DE - A - 1 505 670**
**DE - A - 1 655 690**
**FR - A - 893 388**
**US - A - 2 498 229**
**US - A - 3 257 031**
**US - A - 3 659 892**
**US - A - 3 831 892**

(73) Titulaire: **Société d'Estampage et de Forge Ardennes-Champagne SEFAC F-08800-Montherme (FR)**

(72) Inventeur: **Despas, Bernard Domaine de l'Abbaye Allée du Méhul F-08800-Montherme (FR)**

(74) Mandataire: **Dupuis, François et al, Cabinet Charras 3 Place de l'Hôtel-de-Ville F-42000 St.Etienne (FR)**

Courier Press, Leamington Spa, England.

## Unité mobile avec appareils de levage et de démontage indépendants et amovibles, en vue du dépannage et de l'entretien sur place de véhicules routiers.

L'invention concerne une unité mobile avec appareils de levage et de démontage indépendants et amovibles, en vue du dépannage et de l'entretien sur place due véhicules routiers.

On connait des unités mobiles correspondant au préambule de la revendication 1 (Brevet US—A—3.257.031 DIETZ), comprenant un plateau solidaire du châssis du véhicule et comportant des appareils de levage et de démontage indépendants avec moyens de mise en place à demeure, en vue du dépannage ou de l'entretien sur place des véhicules, quel que soit leur point de stationnement.

On connait également des véhicules spécialisés formant station-service avec poste de distribution d'essence et moyen de levage d'un véhicule d'entretien (Brevet DE—A—1.505.670 BELLAS) ou encore des véhicules ateliers avec organes ou outils de réparation et de levage du véhicule (Brevet FR—A—893.388 STUPP).

De tels unités ou véhicules spécialisés ne permettent pas le déplacement en déhors du véhicule d'organes spécifiques, notamment d'élévateurs à colonnes mobiles en vue de les adapter directement et respectivement à chaque roue du véhicule à dépanner.

La présente invention a pour but de remédier à ces inconvénients.

L'invention telle qu'elle est caractérisée dans les revendications résout le problème consistant à créer une unité mobile avec des élévateurs électromécaniques à colonnes mobiles disposées sur le plateau du véhicule, par l'intermédiaire d'un moyen de fixation et de positionnement sous forme d'un ratelier ouvrant de préférence, autorisant symétriquement par paires leur centrage et leur verrouillage suivant deux niveaux ou rangées horizontales ou verticales, tandis qu'un moyen d'accrochage et de positionnement adaptable sur chaque colonne, autorise, de par l'intermédiaire d'une grue orientable hydraulique ou autre, montée à l'arrière du châssis du véhicule, de saisir judicieusement chaque élévateur logé dans le ratelier, en vue de l'amener et de le positionner devant chaque roue du véhicule à dépanner.

Suivant une autre caractéristique et dans le cas d'un exemple nullement limitatif de réalisation, le ratelier est établi avec une ossature axiale formant cage, disposée et fixée de préférence dans l'axe longitudinal du plateau du véhicule, avec symétriquement à ses extrémités, des cadres transversaux et verticaux avec moyen d'ouverture en hauteur et de verrouillage en position de fermeture; les cadres disposés d'une même côté latéral autorisant de par leurs branches inférieures fixes et de par l'intermédiaire de supports intérieurs profilés en forme de V, avec patins en matière souple, le centrage, l'appui et le positionnement longitudinal des extrémités de la colonne d'un élévateur, tandis que les branches supérieures ouvrantes verticalement avec moyen d'articulation et de verrouillage en position de fermeture, reçoivent extérieurement et de la même façon, des supports de centrage et de positionnement de la colonne d'un deuxième élévateur.

Suivant une autre caractéristique, les colonnes sont positionnées et arrêtées longitudinalement dans le ratelier, de par leur piètement prenant appui transversal sur un patin en matière souple fixé sur la face correspondante d'un montant extérieur solidaire de la partie avant de l'ossature.

Suivant une autre caractéristique, des sangles entourant l'extrémité avant et le pied de chaque colonne d'un élévateur, sont liées aux côtés de l'ossature, avec moyen de mise en tension règlable et de fermeture, pour autoriser leur fixation et leur maintien par rapport au ratelier.

Suivant une autre caractéristique, le moyen d'accrochage et de positionnement, adaptable sur chaque colonne en vue d'autoriser son enlèvement ou mise en place par rapport au ratelier, compte tenu de la position d'équilibre, est établi sous forme d'une semelle profilée qui s'adapte par chevauchement sur la section de la colonne, et comporte intérieurement un tas axial disposé angulairement, en vue d'autoriser de par sa section, son emboîtement oblique entre des nervures rapportées établies dans l'intérieur de la section creuse de ladite colonne, et judicieusement suivant son centre de gravité; ladite semelle formant extérieurement deux axes — tourillons opposés pour l'engagement des crochets fixés en bout des élingues reliées à leur partie supérieure à un palonnier avec anneau axial pour l'engagement du crochet de la grue pivotante de l'arrière du véhicule; des câbles de sécurité reliant en outre le palonnier et les extrémités de la colonne, pour former haubanage.

Suivant une autre caractéristique, des plaques d'appui destinées à s'adapter sous le piètement de chaque colonne, pour éviter leur enfoncement dans le cas de sol meuble, sont établies respectivement en forme de fourche, pour s'engager et se positionner transversalement de par leurs branches, de chaque côté de la surface d'appui du pneu, de manière à former plan d'appui et surface de roulement des roulettes du pied de chaque colonne; lesdites plaques étant assemblées en superposition et fixées verticalement par bridage par exemple à l'avant du camion, tout en prenant appui sur un support solidaire du plateau.

Suivant une autre caractéristique, un élévateur auxiliaire tel un élévateur hydraulique avec tête orientable pour dépose des organes, traverse pour prise sous essieux, est également fixé d'une manière amovible sur le plateau du véhicule, tout en étant intercalé à l'intérieur du ratelier au moyen de fers profilés de guidage, fixés transversalement ou longitudinalement, sur la base de l'ossature et formant rails eu égard aux roues solidaires du socle; un moyen d'amarrage tel que patte avec vis de blocage, étant fixé sur l'un des montants de l'ossature en vue d'assurer l'immobilisation.

Suivant une autre caractéristique, une source d'énergie électrique, ou éventuellement mécanique, telle un groupe électrogène, fixé sur le plateau du camion, comporte des prises extérieures pour le branchement de fils de tous appareils accessoires tels projecteurs, et un câble de sortie avec enrouleur rotatif, fixé latéralement sous le châssis et destiné à alimenter à la façon connue, l'ensemble des colonnes mobiles lors du déplacement en hauteur du véhicule à dépanner.

Ces caractéristiques et d'autres ressortiront bien de la suite de la description:

Pour fixer l'objet de l'invention, sans toutefois le limiter, aux figures des dessins annexés:

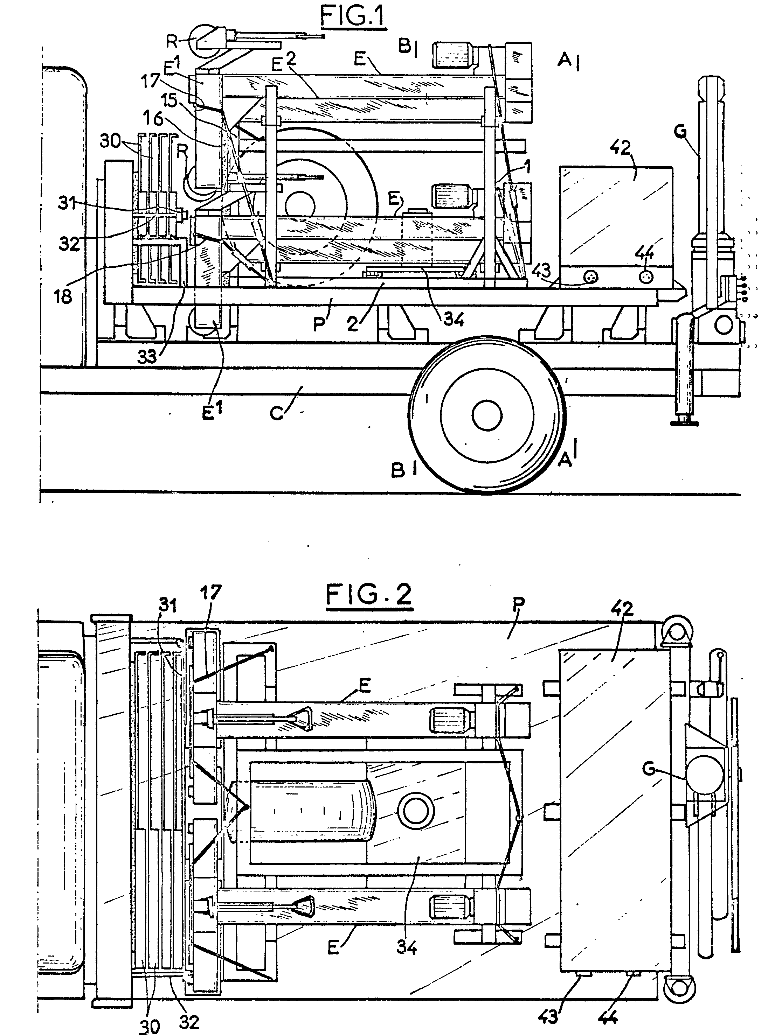

La figure 1 est à petite échelle, une vue extérieure de profil, d'une unité mobile montée sur un camion automobile, équipée de ses appareils de levage et de démontage dans le cas d'inutilisation et de déplacement du véhicule;

La figure 2 est une vue extérieure en plan correspondant à la figure 1;

La figure 3 est à petite échelle, une vue en perspective de l'unité mobile, lors du déchargement et de la mise en place au sol d'un élévateur ou colonne mobile, en vue de son adaptation sur la roue du véhicule à dépanner, pour obtenir son levage;

La figure 4 est une vue en perspective du ratelier seul se montant sur le plateau et autorisant le rangement et le verrouillage de l'ensemble des élévateurs et de l'appareil de levage;

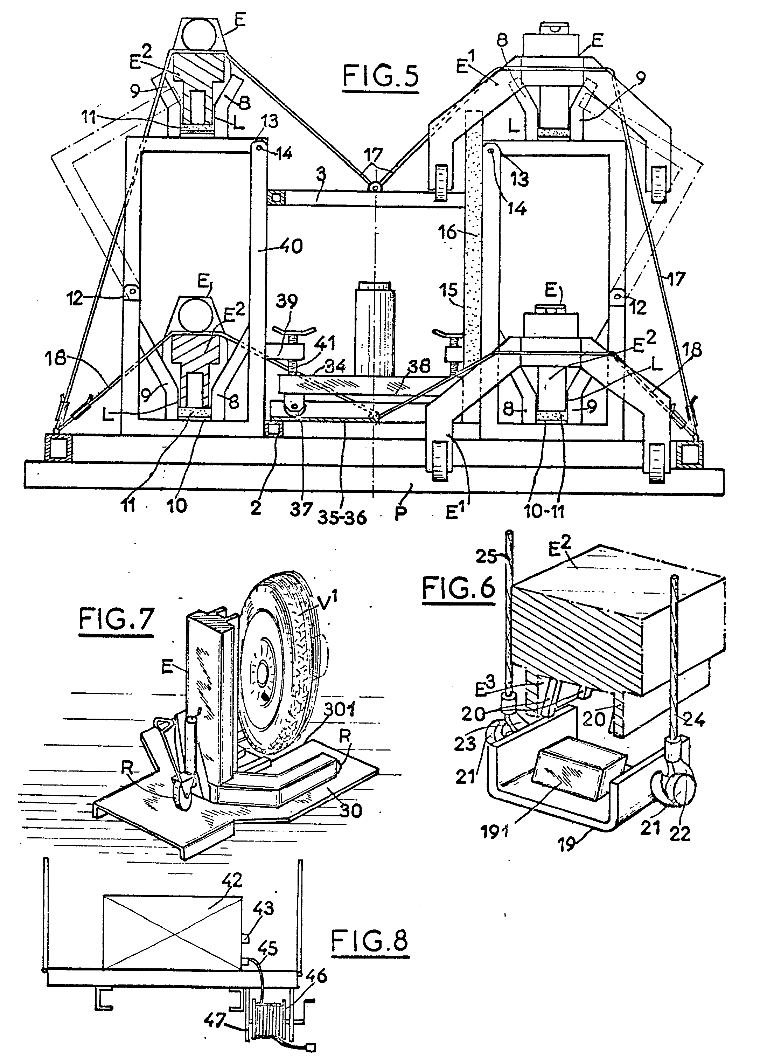

La figure 5 est à plus grande échelle, côté droit, une demi-vue de l'arrière et partielle, suivant la ligne A—A de la figure 1, et suivant le côté gauche, une demi-vue en coupe transversale suivant la ligne B—B de la figure 1;

La figure 6 est à petite échelle, une vue en perspective de la semelle profilée d'ancrage de chaque élévateur, avant son engagement oblique dans sa section creuse;

La figure 7 est une vue en perspective illustrant l'engagement de la plaque d'appui par rapport au piètement de l'élévateur et à la roue du véhicule à soulever;

La figure 8 est une vue arrière schématique de l'unité illustrant le groupe électrogène et le tambour d'enroulement du câble électrique d'alimentation des élévateurs.

Selon la présente invention et dans l'exemple nullement limitatif illustré aux dessins, cette unité mobile comporte essentiellement une ossature 1 fixée axialement et longitudinalement sur un plateau P solidaire de la plateforme ou du châssis d'un camion automobile C ou éventuellement d'une remorque. Cette ossature 1 de préférence en éléments tubulaires assemblés, constitue deux cadres superposés 2 et 3 reliés extérieurement en hauteur par d'autres cadres transversaux 4—5—6—7 — disposés transversalement et symétriquement tout en prenant appui à leur base, également sur le plateau P. Chaque cadre transversal 4—5—6 ou 7, de forme rectangulaire, est établi intérieurement à sa base avec deux supports opposés 8 et 9 disposés symétriquement en forme d'équerres opposées, pour constituer à leur partie supérieure, une ouverture axiale profilée, formant V de centrage, et à la base, un logement L avec entretoise 10 d'appui, recouverte de patins 11 en matière souple.

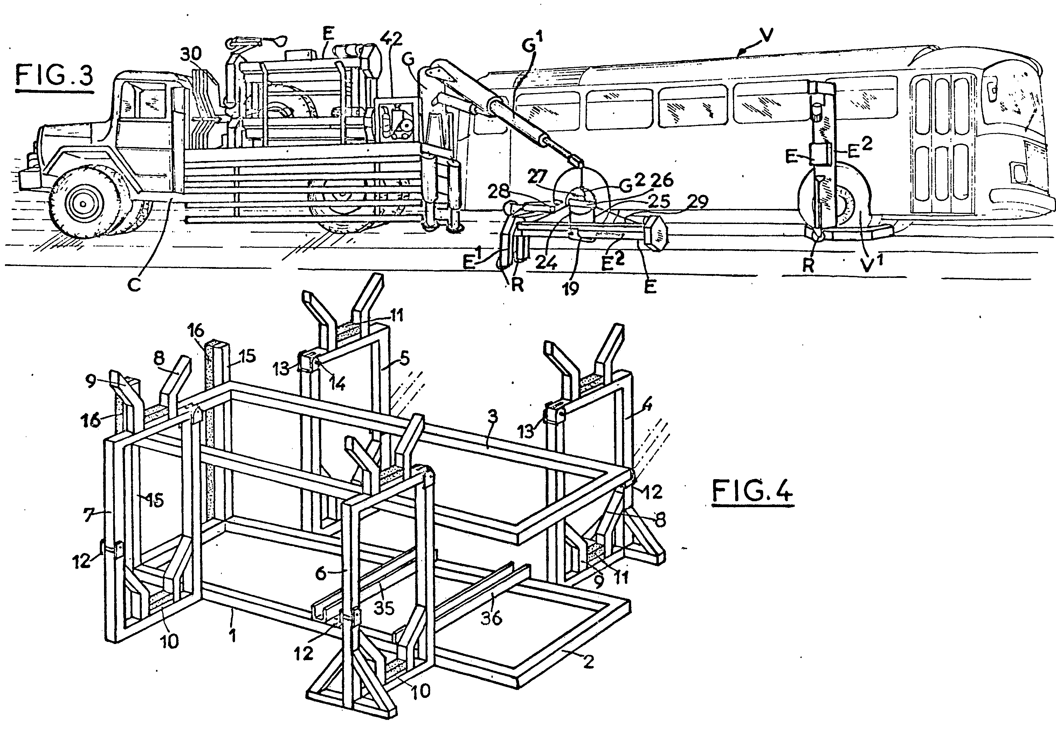

Les parties supérieures des cadres transversaux 4—5—6 ou 7 sont en outre articulées extérieurement autour des axes 12 en formant des équerres pivotantes dont la branche supérieure prend appui de par son extrémité, à l'intérieur d'une chape 13 solidaire de l'extrémité de la branche fixe adjacente, comme illustré figure 4. Une broche amovible 14 traversant successivement la chape 13 et l'extrémité de la branche supérieure, autorise le verrouillage de l'équerre pivotante en position de fermeture.

De la même façon que pour la branche transversale inférieure, la branche supérieure de l'équerre mobile reçoit extérieurement, deux supports opposés 8 et 9 formant entre eux une ouverture de centrage en forme de V, et en prolongement, un logement vertical L avec patin d'appui 11 en matière souple.

Il faut considérer également que l'extrémité avant de l'ossature 1 autorise extérieurement, la fixation de montants 15 de plus grande hauteur, munis suivant leurs faces transversales de bandes 16 en matière souple.

Cette ossature 1 ainsi réalisée, forme ratelier pour le rangement et la fixation judicieuse d'une pluralité d'élévateurs électromécaniques E à colonnes mobiles, de tout type connu, avec chariots mobiles s'adaptant extérieurement sur la roue du véhicule à soulever, et piètement E1 muni de roues, pour le déplacement au sol. Les élévateurs disposés respectivement suivant chaque roue et interconnectés entre eux, permettent ainsi de soulever un véhicule à la façon d'un pont, en vue d'accéder aux organes mécaniques disposés sous le châssis. Lors du rangement des élévateurs E sur le ratelier, ces derniers sont manutentionnés par l'intermédiaire de la grue pivotante G réalisée à la façon connue et disposée à l'arrière du véhicule, pour être disposés et fixés entre les supports opposés 8 et 9 haut et bas, de manière à reposer sur les patins 11.

A cet effet, il faut noter que le pivotement des équerres autour des axes 12, permet d'accéder aux supports inférieurs pour la mise en place ou l'enlèvement de chaque colonne d'élévateur, tandis qu'après fermeture et verrouillage desdites équerres, les branches supérieures autorisent la mise en place des élévateurs supérieurs placés ainsi en superposition. Lors de la mise en place, la colonne E2 de chaque élévateur E est ainsi centrée dans l'ouverture axiale en V formée entre les supports 8 et 9, tout en étant ensuite positionnés dans les logements correspondants L, lors de l'appui sur les patins 11. On remarque également que le positionnement et le maintien longitudinal des élévateurs E par rapport aux cadres d'appui 4—5 et 6—7, est assuré par la face intérieure de la partie débordante de leur piètement E1 qui prend appui suivant chaque côté latéral, sur les bandes 16 des montants 15 disposés vers l'avant du plateau 2 du véhicule. Les piètements E1 des élévateurs inférieurs étant en outre engagés partiellement dans des ouvertures établies dans l'épaisseur du plateau P du camion C.

L'immobilisation de chaque élévateur E par rapport aux cadres d'appui 4—5 et 6—7, est assurée d'une part pour les élévateurs supérieurs et de chaque côté, par une sangle 17 accrochée au cadre supérieur 3 de l'ossature pour entourer la colonne E2 et être reliée au plateau P, et d'autre part pour les élévateurs inférieurs et de chaque côté, par une sangle 18 accrochée au cadre inférieur 2 pour entourer la colonne E2 et être également fixée au plateau P ou autre point fixe. On remarque également que du côté opposé, les sangles 17 et 18 entourent le piètement E1; lesdites sangles comportant des moyens de fermeture et de mise en tension.

Les élévateurs E ainsi positionnés et fixés sur l'ossature 1 ainsi que d'autres appareils décrits ci-après, sont ainsi acheminés directement sur place à proximité immédiate du véhicule à dépanner V ou à entretenir, comme illustré figure 3. De ce fait, ces élévateurs E doivent être déchargés unitairement pour être mis en place verticalement au droit de chaque roue V1, en vue d'assurer le levage du véhicule. Cette opération de manutention et de mise en place s'effectue au moyen de la grue G disposée à demeure à l'arrière du camion C, et comportant une flèche pivotante et orientable G1. Des moyens d'ancrage et de levage étant prévus pour assurer les deplacements dans des conditions judicieuses d'équilibre.

A cet effet, une semelle d'ancrage 19, de section en U, chevauche la section inférieure creuse de chaque colonne E2 lors de son déchargement, et comporte axialement un tas 191 de forme parallélépipédique disposé angulairement et obliquement par rapport à l'axe longitudinal de ladite colonne. Ce tas 191 de largeur correspondant à l'évidement E3 formé par la section en forme de T de la colonne E2, s'engage librement par coulissement, entre des nervures 20 formées par des fers profilés glissés obliquement à l'intérieur dudit évidement E3, et disposés rigoureusement en regard du centre de gravité de l'élévateur E, de manière à permettre horizontalement, son levage pour son dégagement des cadres supports, sans aucun risque de détérioration, et ensuite, son déplacement.

Suivant ses faces latérales extérieures, la semelle amovible 19 comporte des axes-tourillons opposés 21 pour l'engagement des crochets 22 et 23 fixés en bout d'élingues 24 et 25 reliées à leur partie supérieure à un palonnier 26 avec anneau axial 27 pour l'engagement du crochet G2 de la grue G. Des câbles de sécurité 28 et 29 reliant en outre la partie supérieure de l'élévateur E au palonnier 26, en formant und triangulation destinée à assurer l'équilibrage en évitant le balancement.

En dehors du camion C, l'élévateur E est redressé verticalement de par les axes-tourillons 21, de manière à permettre l'appui au sol du piètement E1 muni de roues R, pour son déplacement en regard de la roue V1 du véhicule à lever.

On remarque à cet effet, que dans le cas de sol meuble, des plaques d'appui 30 également fixées sur le plateau P, sont prévues pour être respectivement intercalées entre le piètement et le sol. Chaque plaque 30 est établie en forme de fourche, pour s'engager transversalement de par son ouverture 301, de chaque côté de la surface d'appui de la roue V1, tout en constituant extérieurement une grande surface de roulement et d'appui des roues R du piètement E1.

Lors de l'inutilisation, ces plaques d'appui 30 sont assemblées en superposition et fixées verticalement à l'avant du plateau P par bride pivotante 31 avec vis de serrage 32 ou encore par tout autre moyen. Un support équerré 33 étant en outre prévu sur le plateau P pour assurer le positionnement et l'appui vertical de l'ensemble des plaques 30.

L'unité mobile ainsi équipée des élévateurs E formant pont et des plaques d'appui 30, reçoit également un élévateur auxiliaire 34 à commande hydraulique de préférence, comportant une tête mobile et orientable, destinée par exemple à la dépose des organes lourds du véhicule à dépanner V, après son levage.

Cet élévateur de tout type connu et approprié, est intercalé axialement à l'intérieur et à l'arrière de l'ossature 1, au moyen de fers profilés en U, 35—36, fixés transversalement en reliant les longerons du cache inférieur 2, de manière à constituer des rails de guidage et d'appui des roues 37 solidaires du socle 38. Un moyen de verrouillage tel que patte, 39, solidaire d'un des montants 40 du cadre transversal correspondant, avec vis de blocage 41, coopérant en serrage sur le socle 38, assure le maintien en position du dit élévateur 34. Ce dernier étant retiré du plateau P et acheminé soit manuellement soit par l'intermédiaire de la grue hydraulique G alimentée par pompe adaptée à la sortie de la boîte du camion 3.

En dehors de l'ossature 1 et à l'arrière, le plateau P du camion C reçoit un groupe électrogène 42 réalisé à la façon connue et comportant extérieurement des prises électriques 43 et 44 destinées au branchement de fils d'appareils accessoires tels que projecteurs, outillage. D'autre part, un câble de sortie 45, alimenté par ledit groupe 42, est relié à un tambour-enrouleur 46 monté à rotation libre sous le châssis du camion, par l'intermédiaire de supports 47, et destiné à l'alimentation à distance de l'ensemble des élévateurs E, pour le levage du véhicule V.

Il est bien évident que l'unité mobile ainsi réalisée peut recevoir tout autre accessoire, tel que roue de secours 48 logée longitudinalement à l'intérieur de l'ossature 1, outillage, pièces de rechange, accessoires adaptables aux élévateurs E ou 34.

L'ensemble de cette unité mobile ainsi montée sur un plateau peut comporter tout autre moyen de fixation d'élévateurs qui peuvent également être disposés verticalement.

On souligne également que les ridelles rabattables propres au camion C assurent lors des déplacements, une protection de l'ensemble.

Il est bien évident que cette unité mobile peut être utilisée de par ses agencements, pour tous types de véhicules automobiles ou autres.

## Revendications

1. Unité mobile avec appareils de levage et de démontage indépendants et amovibles, en vue du dépannage et de l'entretien sur place de véhicules routiers, comprenant un plateau (P) solidaire de la plate-forme ou du châssis d'un véhicule automobile (C) avec des appareils de levage (E) (34) (G) et de démontage indépendants et leurs moyens de fixation, de mise en place et de commande, en vue du dépannage ou de l'entretien sur place d'un véhicule, caractérisé en ce qu'elle comprend des élévateurs électromécaniques (E) à collonnes mobiles, disposés sur le plateau (P) du véhicule, par l'intermédiaire d'un moyen de fixation et de positionnement sous forme d'un ratelier (1), ouvrant de préférence, autorisant symétriquement par paire, leur centrage et leur verrouillage suivant deux niveaux ou rangées horizontales ou verticales, tandis qu'un moyen d'accrochage (19) et de positionnement, adaptable sur chaque colonne, permet, de par l'intermédiaire d'une grue (G), orientable, hydraulique ou autre et montée à l'arrière du châssis du véhicule (C), de saisir judicieusement chaque élévateur (E) logé dans le ratelier (1), en vue de l'amener et de le positionner devant chaque roue (V1) du véhicule à dépanner (V); un élévateur auxiliaire (34) avec tête orientable, guidé et fixé d'une manière amovible sur le plateau (P) à l'intérieur du ratelier (1) et déplaçable par ladite grue (G); un générateur (42) d'énergie électrique, fixé à l'arrière sur le plateau (P), avec prises pour le branchement d'appareils accessoires et câble de sortie (45) destiné à l'alimentation à distance de l'ensemble des élévateurs (E).

2. Unité mobile selon 1, caractérisée en ce que le ratelier (1) est établi avec une ossature axiale (2—3) formant cage disposée et fixée de préférence dans l'axe longitudinal du plateau (P) du véhicule, avec symétriquement à ses extrémités, des cadres transversaux et verticaux (4—5—6—7) avec moyen d'ouverture en hauteur (12) et de verrouillage (13—14) en position de fermeture; les cadres disposés d'un même côté latéral autorisant de par leurs branches inférieures fixes, et de par l'intermédiaire de supports intérieurs (8—9) profilés en forme de V avec patins (11) en matière souple, le centrage, l'appui et le positionnement longitudinal des extrémités de la colonne d'un élévateur (E), tandis que les branches supérieures ouvrantes verticalement, avec moyen d'articulation (12) et de verrouillage (13—14) en position de fermeture, reçoivent extérieurement et de la même façon des supports (8—9) de centrage et de positionnement de la colonne d'un deuxième élévateur (E).

3. Unité mobile selon 1—2, caractérisée en ce que les colonnes des élévateurs (E) sont positionnées et arrêtées longitudinalement dans le ratelier (1) de par leur piètement (E1) prenant appui transversal sur un patin (16) en matière souple, fixé sur la face correspondante d'un montant extérieur (15) solidaire de la partie avant de l'ossature (1).

4. Unité mobile selon 3, caractérisée en ce que la fixation et le maintien de chaque élévateur (E) par rapport au ratelier (1), sont obtenus par des sangles (17—18) entourant respectivement leur extrémité avant et leur piètement (E1) pour être liées á l'ossature (1) par l'intermédiaire de boucle d'ouverture et de mise en tension réglable.

5. Unité mobile selon 1, caractérisée en ce que le moyen d'accrochage adaptable sur chaque élévateur (E), en vue de sa manutention pour son utilisation sur le véhicule à dépanner ou pour sa mise en place sur le ratelier de ladite unité, est établi sous forme d'une semelle profilée (19) qui s'adapte par chevauchement sur la section (E2) de la colonne, et comporte intérieurement un tas axial (191) disposé angulairement, en vue d'autoriser de par sa section, son emboîtement oblique entre les nervures (20) rapportées, établies dans l'intérieur de la section creuse (E3) de ladite colonne (E) et judicieusement suivant son centre de gravité; la dite semelle (19) formant extérieurement deux axes-tourillons (21) opposés, pour l'engagement des crochets (22—23) fixés en bout des élingues (24—25) reliées à leur partie supérieure à un palonnier (26) avec anneau axial (27) pour l'engagement du crochet (G2) de la grue (G) pivotante de l'arrière du véhicule; des câbles de sécurité (28—29) reliant entre eux le palonnier (26) et les extrémités de la colonne pour former haubanage.

6. Unité mobile selon 1, caractérisée en ce que des plaques d'appui (30) destinées à s'adapter sous le piètement (E1) de chaque colonne, pour éviter leur enfoncement dans le cas de sol meuble, sont établies respectivement en forme de fourche pour s'engager et se positionner transversalement de par leurs branches, de chaque côté de la surface d'appui du pneu (R), de manière à former plans d'appui et surface de roulement des roulettes du pied de chaque colonne; lesdites plaques (30) étant assemblées en superposition et fixées verticalement par bridage (31—32) par exemple à l'avant du camion, tout en prenant appui sur un support (33) solidaire du plateau (P).

7. Unité mobile selon 1, caractérisée en ce que l'élévateur auxiliaire (34) tel un élévateur hydraulique, avec tête orientable pour dépose des organes, traverse pour prise sous essieux, est également fixé d'une manière amovible sur le plateau (P) du véhicule, tout en étant intercalé à l'intérieure du ratelier au moyen de fers profilés (35—36) de guidage, fixés transversalement ou longitudinalement sur la base de l'ossature et formant rails eu égard aux roures (37) solidaires du socle (38); un moyen d'amarrage tel que patte (39) avec vis de blocage (41), étant fixé sur l'un des montants (40) de l'ossature, en vue d'assurer l'immobilisation.

8. Unité mobile selon 1, caractérisée en ce que le générateur (42) d'énergie électrique, tel un groupe électrogène fixé sur le plateau (P) du camion, comporte des prises extérieures (43—44) pour le branchement de fils de tous appareils accessoires tels projecteurs, et un câble de sortie (45) avec enrouleur (46) rotatif, fixé latéralement sous le châssis, et destiné à alimenter, à la façon connue, l'ensemble des colonnes mobiles des élévateurs (E), lors du déplacement en hauteur du véhicule à dépanner.

## Claims

1. A mobile unit with independent and detachable lifting and dismantling apparatus for the repair and the maintenance in situ of motor cars, comprising a plate (P) integral with the platform or the chassis of a motor car (C) with independent lifting apparatus (E) (34) (G) and dismantling apparatus and the fastening, positioning and control means thereof for the repair and the maintenance in situ of a motor car, characterized in that said unit includes electromechanical lifts or hoists (E) with mobile columns disposed on the plate (P) of the vehicle through the intermediary of a securing and positioning means in the form of a crib (1), which are preferably opening and permit symmetrically by the pair their centering and their interlocking along two horizontal or vertical levels or rows, while a hooking and securing means (19) to be adapted on each column permits through the intermediary of an orientable, hydraulic or like crane (G), mounted rearwardly of the chassis of the vehicle (C), to grip conveniently each lift or hoist (E) located within the crib (1) to bring and position same in front of each wheel (V1) of the vehicle to be repaired (V); an auxiliary lifting device (34) with orientable head, guided and fastened in a removable manner on the plate (P) within the crib (1) and which can be moved by said crane (G); an electric power generator (42) secured rearwardly on the plate (P), with sockets for the connection of accessory devices and an output cable (45) for the remote supply of energie for the assembly of the lifting means (E).

2. A mobile unit as claimed in claim 1, characterized in that the crib (1) is established with a cage-forming axial framework (2—3) disposed and fixed preferably in the longitudinal axis of the plate (P) of the vehicle, with transversal and vertical frames (4—5—6—7) disposed symmetrically to the ends of said plate, with vertical opening means (12) and interlocking means (13—14) in the closed position, the frames disposed on the same lateral side permitting by means of their fixed lower legs and through the intermediary of V-shaped inside supports (8—9) with shoes (11) of flexible material the centering, the abutment and the longitudinal positioning of the ends of the column of a lifting device (E), while the vertically opening upper legs, with linking means (12) and interlocking means (13—14) in the closing position, receive externally and in the same way the centering and positioning supports (8—9) of the column of a second lifting device (E).

3. A mobile unit as claimed in claims 1—2, characterized in that the columns of the lifting devices (E) are positioned and stopped endwise in the crib (1) by means of their toe (E1) resting transversely against a shoe (16) of flexible material, secured on the corresponding face of an outside post (15) integral with the front part of the framework (1).

4. A mobile unit as claimed in claim 3, characterized in that each lifting device (E) is secured and held in position relative to the crib (1) by means of straps (17—18) surrounding respectively the front end and the toe (E1) of these lifting devices to be connected with the framework (1) through the intermediary of a loop for adjustable tensioning and opening.

5. A mobile unit as claimed in claim 1, characterized in that the hooking means to be adapted on each lifting device (E) for the handling or the use thereof on the vehicle to be repaired or for the positioning thereof on the crib of said mobile unit, is established in the form of a profiled sole (19) to be adapted by overlapping on the section (E2) of the column, and has internally an axial block $(19^1)$ disposed angularly so that the section of said block will permit the oblique nesting thereof between the ribs (20) which are built in and established inside the hollow section (E3) of said column (E) and suitably along the centre of gravity thereof, said sole (19) forming externally two opposed journal-pins (21) for the engagement of the hooks (22—23) fixed at the end of the slings (24—25) connected at the upper portion thereof with an equalizer cross-bar (26) with axial ring (27) for the engagement of the hook (G2) of the pivotal crane (G) of the rear part of the vehicle, the equalizer cross-bar (26) and the ends of the column being interconnected by safety cables (28—29) to form a bracing.

6. A mobile unit as claimed in claim 1, characterized in that abutment plates (30) to be adapted under the toe (E1) of each column to prevent the sinking of said columns in the case of loose ground, are established respectively in the form of a fork to be engaged and positioned transversely by means of their legs on either side of the bearing surface of the tire (R) so that said plates will form abutment planes and bearing surface of the castors of the foot of each column, said plates (30) being assembled in superposition and fixed vertically by flanging (31—32) for example at the front part of the motor lorry, while being abutted upon a support (33) integral with the plate (P).

7. A mobile unit as claimed in claim 1, characterized in that an auxiliary lifting device (34) such as a hydraulic lifting device with orientable head for taking down the organs and crosspiece for gripping beneath axles, is also detachably secured on the plate (P) of the vehicle while being interposed inside the crib by means of guiding profiled irons (35—36) which are fixed transversely or longitudinally on the bottom of the framework and from rails in regard to the wheels (37) integral with the base (38), an anchoring means such as a lug (39) with locking screw (41) being secured upon one of the posts (40) of the framework for the immobilization of the unit.

8. A mobile unit as claimed in claim 1, characterized in that the electric power generator (42) such as a power generating set fixed on the plate (P) of the motor lorry, has external sockets (43—44) for connecting wires of any accessory devices such as search lights, and an output cable (45) with a rotary winding device (46) fixed laterally under the chassis for the power supply, in a well-known manner, of the assembly of the mobile columns of the lifting devices (E) when the vehicle to the repaired is moved vertically.

**Patentansprüche**

1. Eine bewegliche Einheit mit unabhängigen und abnehmbaren Anhebe- und Abbauerinrichtungen zur Bergung und Wartung auf der Stelle von verschiedenen Landstrassenkraftwagen, die eine mit der Plattform oder mit dem Fahrgestell eines Lastkraftwagens (C) festgemachte Platte (P) mit unabhängigen Anhebevorrichtungen (E) (34) (G) und Abbauvorrichtungen sowie mit den Mitteln zur Befestigung, Einstellung und Steuerung derselben für die Bergung oder die Wartung auf der Stelle eines Kraftwagens aufweist, dadurch gekennzeichnet, dass diese bewegliche Einheit elektromechanische Elevatoren (E) mit beweglichen Ständern aufweist, die mittels einer als vorzugsweise öffnender Aufsteckrahmen (1) gebildeten Befestigungs- und Einstellvorrichtung auf der Platte (P) des Wagens angebracht sind, wobei diese Befestigungs- und Einstellvorrichtung symetrisch und paarweise die Zentrierung und die Verriegelung dieser Elevatoren gemäss zwei vertikalen oder horizontalen Höhen oder Reihen gestattet, während eine auf jeden Ständer anpassbare Einstell- und Einhakevorrichtung (19) mittels eines schwenkbaren, hydraulischen oder anderen auf dem Hinterteil des Fahrgestells des Wagens (C) montierten Krans (G) das zweckmässige Anfassen jedes in dem Aufsteckrahmen (1) angeordneten Elevators (E) zum Anbringen und Einstellen desselben vor jedem Rad (V1) des zu bergenden Wagens (V) gestattet; dass ein Hilfselevator (34) mit schwenkbarem Kopt auf der Platte (P) innerhalf des Aufsteckrahmens (1) geführt und abnehmbar befestigt ist und durch besagten Kran (G) verschoben werden kann; dass ein Generator (42) elektrischer Energie mit Steckdosen zum Anschluss von Hilfsapparaten und Ausgangsleitung (45) für die Fernspeisung der Gesamtheit der Elevatoren (E) am Hinterteil auf der Platte (P) befestigt ist.

2. Eine bewegliche Einheit nach Anspruch 1, dadurch gekennzeichnet, dass der Aufsteckrahmen (1) aus einem käfigbildenden, vorzugsweise in der längsseitigen Achse der Platte (P) des Wagens angebrachten und befestigten Axialgerüst (2—3) besteht, mit symetrisch zu dessen Enden vorgesehenen Quer- und Vertikalrahmen (4—5—6—7) mit mitteln zur Vertikalöffnung (12) und zur Verriegelung (13—14) in der geschlossenen Stellung, wobei die auf derselben Seite angebrachten Rahmen mittels ihrer feststehenden Niederschenkel sowie mittels V-förmiger Innenträger (8—9) mit Schuhen (11) aus weichem Werkstoff die Zentrierung, die Abstützung und das längsseitige Einstellen der Enden des Ständers eines Elevators (E), während die senkrecht öffnenden Oberschenkel mit Gelenk (12) und Verriegelungsmitteln (13—14) in der geschlossenen Stellung die Träger (8—9) zur Zentrierung und zum Einstellen des Ständers eines zweiten Elevators (E) aussenseitig und in derselben Weise aufnehmen.

3. Eine bewegliche Einheit nach Anspruch 1—2, dadurch gekennzeichnet, dass die Ständer der Elevatoren (E) durch ihre Fussabstützung (E1) in dem Aufsteckrahmen (1) längsseitig eingestellt und gesperrt werden, wobei diese Fussabstützung auf einen Schuh (16) aus weichem Werkstoff querseitig aufgedrückt wird, der auf die entsprechende Fläche eines mit dem Vorderteil des Gerusts festgemachten Pfostens (15) befestift wird.

4. Eine bewegliche Einheit nach Anspruch 3, dadurch gekennzeichnet, dass die Befestigung und das Halten jedes Elevators (E) in bezug auf den Steckrahmen (1) mittels Gurte (17—18) erfolgt, die das Vorderende und die Fussabstützung (E1) dieser Elevatoren zur Verbindung mit dem Gerüst (1) mittels einer Schnalle für verstellbares Öffnen und Ausspannen beziehungsweise umschliessen.

5. Eine bewegliche Einheit nach Anspruch 1, dadurch gekennzeichnet, dass die auf jedem Elevator (E) zur Handhabung und Verwendung desselben auf den zu bergenden Wagen oder zum Einstellen desselben auf den Aufsteckrahmen besagter Einheit anpassbare Einhakevorrichtung aus einer profilierten Sohle (19) besteht, die sich durch Übereinandergreifen auf den Querschnitt (E2) des Ständers einrichtet, und weist innenseitig einen winklig angeordneten Axialblock ($19^1$) auf, zur schrägen Einfügung desselben, durch seine Querschnitt, zwischen den im Innern des hohlquerschnitte (E3) des besagten Ständers (E) und zweckmässig nach dem Schwerpunkt desselben vorgesehenen angebauten Rippen (20), wobei die besagte Sohle (19) zwei entgegengesetzten Zapfen-Spindeln (21) zum Eingreifen der am Ende der Schlingen (24—25) befestigten Haken (22—23) äusserlich bildet, und wobei die Schlingen an ihrem Oberteil mit einem Schwengel (26) mit Axialring (27) zum Eingreifen des Hakens (G2) des schwenkbaren Krans (G) des Hinterteils des Wagens verbunden sind, mit Sicherheitskabeln (28—29), die den Schwengel (26) und die Enden des Ständers zur Bildung einer Verspannung aneinander anschliessen.

6. Eine bewegliche Einheit nach Anspruch 1, dadurch gekennzeichnet, dass die Stützplatten (30) zum Anpassen unter die Fussabstützung (E1) jedes Ständers zum Vermeiden des Sinkens dieser Ständer in einen lockeren Boden jeweils aus einer Gabel gebildet sind, die für das Eingreifen und querseitige Einstellen mittels ihrer Schenkel beiderseitig der Stützfläche der Bereifung (E) vorgesehen ist, um Stützebenen und Rollflächen für die Rädchen des Fusses jedes Ständers zu bilden, wobei die besagten Platten (30) aufeinandergelegt zusammengebaut und mittels Verflanschen (31—32) beispielsweise am Vorderteil des Lastkraftwagens senkrecht befestigt werden, während sie sich auf einen mit der Platte (P) festgemachten Träger (33) abstützen.

7. Eine bewegliche Einheit nach Anspruch 1, dadurch gekennzeichnet, dass auch ein zum Quergreifen unter die Wagenachse vorgesehener Hilfselevator (34) wie ein hydraulischer Elevator mit schwenkbarem Kopf zum Niederlegen der Organe abnehmbar auf der Platte (P) des Wagens befestigt ist, während er im Innern des Aufsteckrahmens mittels profilierter Führungseisen (35—36) zwischengeschaltet wird, die querseitig oder längsseitig auf der Grundplatte des Gerüsts befestigt sind und hinsichtlich der mit der Grundplatte (38) festgemachten Räder (37) Schienen bilden, wobei eine Verankerung wie eine Lasche (39) mit Blockierungsschraube (41) auf einem der Pfosten (40) des Gerüsts zum Sicherstellen der Unbeweglichkeit befestigt wird.

8. Eine bewegliche Einheit nach Anspruch 1, dadurch gekennzeichnet, dass der Generator von elektrischer Energie (42), wie ein auf der Platte (P) des Lastkraftwagens befestigter Stromerzeugungssatz, äusserliche Steckdosen (43—44) zum Anschluss von Leitungen für Zubehör aller Art wie Projektoren und eine Ausgangsleitung (45) mit drehbarem Aufwickler (46) aufweist, der seitlich unter dem Fahrgestell befestigt ist, wobei diese Leitung zur Speisung in bekannter Weise der Gesamtheit der beweglichen Ständer der Elevatoren (E) bei der Höhenverstellung des zu bergenden Wagens vorgesehen wird.

**0 001 370**

FIG.1

FIG.2

FIG.3

FIG.4

0 001 370

FIG.5

FIG.7

FIG.6

FIG.8

3